# EUROPEAN PATENT APPLICATION

(11) **EP 1 151 648 A2**
(43) Date of publication of application: **07.11.2001**
(21) Application number: 01303603.3
(22) Date of filing: 19.04.2001
(51) Int. Cl.: A01B 15/14

(54) **Adjustment mechanism for reversible plough**

(30) Priority: 05.05.2000 GB 0010796
(71) Applicant: KVERNELAND KLEPP AS, N-4344 Kvernaland (NO)
(72) Inventor: Salte, Torstein, 4352 Kleppe (NO)
(74) Representative: Orr, William McLean

(57) **Abstract**

A reversible plough which is intended to be coupled behind a propelling vehicle and which comprises a headstock (1); a main beam (13) having a number of pairs of reversible plough bodies spaced apart along the length of the main beam; a mounting means (2) on which the main beam (13) is mounted, said mounting means (2) being rotatable about a substantially horizontal axis in order to adjust the plough bodies between right side ploughing and left side ploughing; a parallelogram type lateral adjustment mechanism (2,3,4,5) which mounts the main beam (13) on the mounting bracket (2) and which is operative to adjust the main beam (13) laterally of the ploughing direction between "on land" and "in the furrow" ploughing modes, and while maintaining substantially the same angle of the main beam (13) to the ploughing direction; and an additional adjustment mechanism (17) interconnecting said lateral adjustment mechanism (2,3,4,5) and said main beam (13) and being moveable with the main beam (13) during lateral adjustment of the main beam (13), said additional mechanism (17) being operative to adjust the angle of the main beam (13) to the ploughing direction when it is required to adjust the width of furrows formed by the plough bodies.

## Description

This invention relates to a reversible plough which is intended to be coupled behind a propelling vehicle, such as an agricultural tractor, and which comprises a headstock, a plough beam having a number of pairs of reversible plough bodies spaced apart along the length of the main beam, and a mounting means on which the main beam is mounted, said mounting means being rotatable about a substantially horizontal axis in order to adjust the plough bodies of the main beam between right side ploughing and left side ploughing.

Reversible ploughs can usually be "fully mounted", or "semi-mounted" at the rear of a tractor, as will be well known to those of ordinary skill in the art, and with the main beam extending obliquely relative to the ploughing direction, and the mounting means usually comprising a mounting bracket which is rotatably mounted on the headstock. Reversal of the plough bodies takes place by rotation of the mounting bracket through approximately 180° about a rotational axis provided by the headstock and which axis extends parallel to the longitudinal axis of the tractor, and therefore also to the ploughing direction. The main beam therefore takes up a new, but still obliquely extending position relative to the ploughing direction.

Given that pairs of plough bodies are spaced apart along the length of the obliquely extending main beam, it will be evident that the width of the furrow produced by each plough body will depend upon the angle which the (obliquely extending) main beam makes with the ploughing direction. If it is desired to have a facility to adjust the furrow width, it is usual to provide means for angularly adjusting the forward end of the main beam relative to the mounting bracket on which it is mounted.

It is also well known that ploughing can take place in either one of two propelling modes of a tractor, one of which is known as "driving in the furrow" and the other of which is known as "driving on land".

Each mode of operation has advantages and disadvantages. Thus, "driving on land" avoids problems of compaction of already ploughed soil, in that the plough bodies located immediately behind the tractor turn over the ground over which the tractor wheels have passed. However, the maintenance of steady and successively parallel passes of a tractor, when driving on land, is more difficult than driving in the furrow, in that it is easier to guide the movement of the tractor when following a previously formed furrow than when driving on land.

On the other hand, the guiding advantage of driving in the furrow is offset by the disadvantage of compaction of the ploughed soil by the wheels of the tractor.

In addition, the desirability of using one ploughing mode or the other may also depend upon a) weather conditions, b) soil conditions, c) the furrow width, and d) the size of the tractor and of the driving wheels of the tractor.

It is therefore desirable to provide a design of reversible plough frame which can be adjusted relatively easily and quickly between an "on land" mode and an "in the furrow" mode.

It is known from WO00/02439 to provide a lateral adjustment mechanism for a fully mounted plough, having a plough frame, coupling means at the forward end of the plough frame to fully mount the plough on the rear of a propelling vehicle, a number of plough bodies spaced apart along the length of the plough frame, and a lateral adjustment mechanism for moving the plough frame laterally relative to the coupling means when it is required to adjust the ploughing positions of the plough bodies relative to the propelling vehicle.

The plough frame includes a main beam having supports arranged along its length, and each mounting a respective plough body, and in which the supports are pivotally mounted on the beam via respective first pivots. A control rod extends along the beam and is pivotally connected to the supports (for mounting the plough bodies) via respective second pivots. The adjustment mechanism includes a control arm mounted on the beam and which is operative to control the lateral position of the beam relative to the coupling means, and in which the control arm is pivotally connected to the beam and to the control rod via third and fourth pivots respectively.

The first and second pivot associated with each support, together with the third and fourth pivots, are located each at a respective corner of a parallelogram type linkage, whereby during lateral adjustment of the beam, the supports mounting the plough bodies always face in the same ploughing direction.

The coupling means includes a mounting bracket which is connectable to the rear of the propelling vehicle and to which the control arm is connected via a pair of parallel links, and each of these links is pivotally connected at one end to the mounting bracket via a respective fifth pivot, and at its opposite end is pivotally connected to the control arm via a respective sixth pivot.

The pairs of fifth and sixth pivots are located at the corners of the parallelogram so that the links function as a parallelogram linkage to move the main beam and the control rod laterally, and an actuator coupled with the mounting bracket is operative to adjust the plough frame laterally, when lateral adjustment of the plough bodies is required, via angular adjustment of the links relative to the mounting bracket.

This known arrangement of plough frame can easily be adjusted laterally relative to its mounting on the tractor, so that the furrows formed by the plough bodies in one pass can be spaced laterally from an adjacent furrow of a set of furrows formed in a previous pass and by any required amount, and without need for the tractor wheels to be driven along the adjacent furrow.

This known plough frame therefore can be used, in particular with tractors having wide tyres, and also with belt-propelled tractors and vehicles having endless tracks.

However, in this known design of plough frame, the angle of inclination of the main beam relative to the ploughing direction always remains the same, during lateral adjustment of the plough frame. The beam therefore can take up a number of different laterally adjusted positions, but always with the angle of the beam extending at the same angle to the ploughing direction, by virtue of the parallelogram type linkage forming the lateral adjustment mechanism which interconnects the beam to the forward mounting bracket.

The present invention is distinguished from this known arrangement, in that although there is a parallelogram type linkage which is connected to the main beam, and which can be adjusted, in one mode of operation, so as to adjust the position of the beam laterally, (while still maintaining substantially the same angle of inclination to the ploughing direction), and thereby enable the plough to be converted between "on land" and "in the furrow" ploughing, but also includes a further mechanism, coupled with the parallelogram linkage, and which is operative, in a further mode of operation of the plough, to allow the inclination of the axis of the beam to be adjusted relative to the ploughing direction, for the purposes of furrow width adjustment, and which maintains this adjusted angle of the beam during lateral adjustment of the plough between "on land" and "in the furrow" ploughing mode adjustment.

According to the invention there is provided a reversible plough as defined in claim 1.

Preferred aspects of the plough are set out in the dependent claims.

A preferred embodiment of a reversible plough according to the invention will now be described in detail, by way of example only, and with reference to the accompanying drawings, in which:
Figure 1 is a plan view of a reversible plough according to the invention, shown occupying a first mode of ploughing, known as "in the furrow" ploughing, and showing also the plough bodies adjusted to a wide setting of furrow widths;
Figure 2 is a view, similar to Figure 1, but showing the plough adjusted to a ploughing mode known as "on land", and with the plough bodies still set to the same furrow width setting shown in Figure 1;
Figure 3 is a plan view of the plough, after adjustment to a smaller furrow width setting, but still with the plough operating "in the furrow", as per Figure 1; and
Figure 4 is a plan view of the plough, with the reduced furrow width setting similar to Figure 3, but also laterally adjusted to the "on land" ploughing mode.

Referring now to the drawings, there is shown a reversible plough which is intended to be coupled behind a propelling vehicle, and which will usually be an agricultural tractor. The embodiment of reversible plough shown in the drawings is of the "fully mounted" type, though it should be understood that the invention may be applied also to a semi-mounted plough, if required.

The plough has a headstock 1 which is intended to be connected to a usual three point lifting device at the rear of a tractor, and which defines a substantially horizontal rotational axis, extending in the ploughing direction, and about which the entire plough frame can rotate, in order to reverse the plough bodies between left side ploughing and right side ploughing.

A mounting bracket 2 is rotatably mounted on the headstock 1, and a main beam 13 is mounted indirectly on the mounting bracket 2 and has a usual arrangement of support brackets 14, 15, arranged along its length, and on which are mounted pairs of reversible plough bodies (not shown). The embodiment illustrated has been designed to mount a large number of reversible plough bodies, and typically five, six or seven sets or pairs of plough bodies may be provided, arranged at spaced apart positions along the length of the main beam 13.

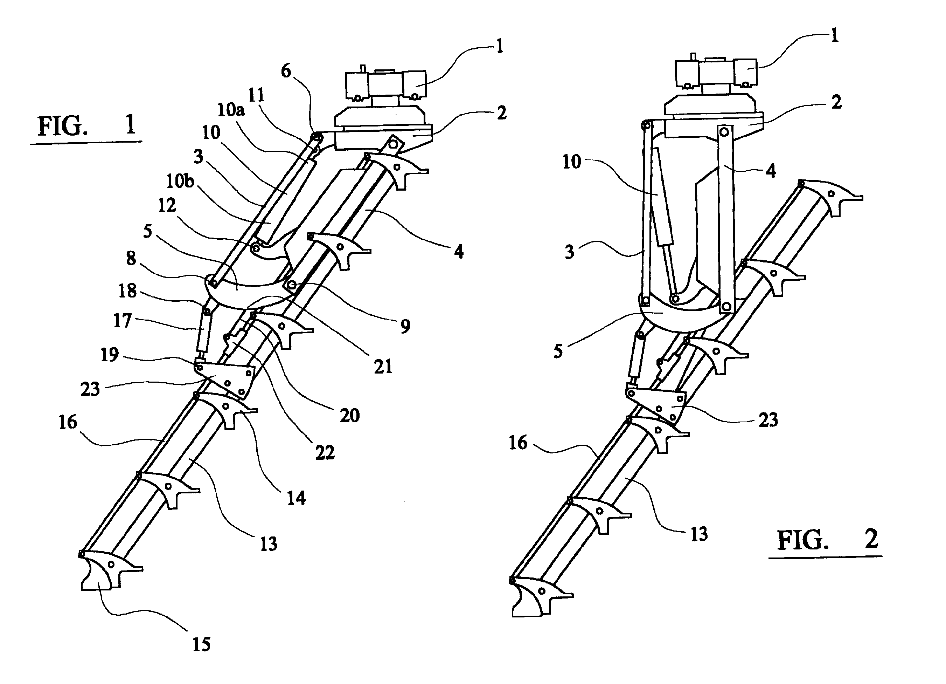

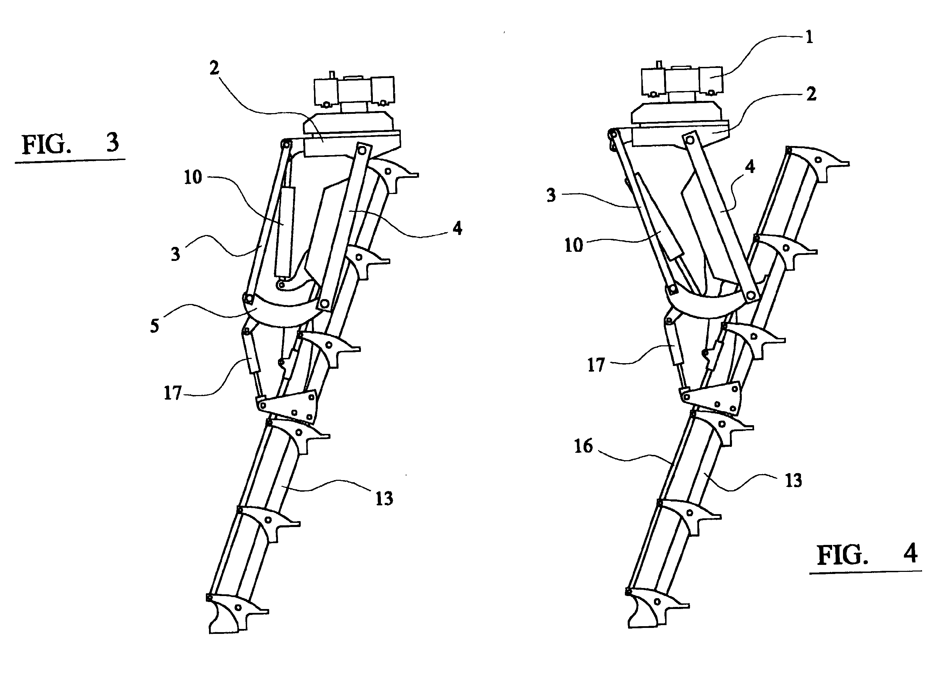

The plough shown in the drawings can be adjusted laterally relative to the mounting bracket 2, so that it can take up one ploughing mode, as shown in Figures 1 and 3, in which the tractor has one of its driving wheels running in a previously formed furrow (so called "in the furrow" ploughing mode); however, the plough can be adjusted laterally to a position shown in Figures 2 and 4, and which is a ploughing mode known as "on land" ploughing. In the position of the plough shown in Figures 1 and 3, the mounting bracket 2 is adjusted laterally relative to the headstock 1, to adjust itself to the actual wheel base of the tractor being used, and such that the first plough body ie the foremost plough body carried by main beam 13, comes into the correct lateral position when one of the driving wheels of the tractor is driven in the previously formed furrow in a previous pass of the tractor and plough combination.

A parallelogram type of lateral adjustment mechanism is provided, which mounts the main beam 13 on the mounting bracket 2 and which is operative to adjust the main beam 13 laterally of the ploughing direction between "on land" and "in the furrow" ploughing modes (eg from Figure 1 to Figure 2 or Figure 3 to Figure 4), and while maintaining substantially the same angle of the main beam 13 to the ploughing direction. Thus, it can be seen from Figures 1 and 2 that the plough bodies carried by the main beam 13 are set at a relatively wide furrow width spacing, i.e. the main beam 13 extends obliquely of the ploughing direction, and with a substantial angle between the axis of the main beam and the ploughing direction. By contrast, in the adjusted position shown in Figures 3 and 4, the main beam 13 takes up a smaller angle to the ploughing direction, and therefore this sets the plough bodies to produce narrower furrow widths than the adjustment position of Figures 1 and 2.

The parallelogram type lateral adjustment mechanism effectively comprises a four bar type linkage, of which the headstock 2 forms a first arm or bar, and parallel links 3 and 4 are pivoted at their forward ends on respective pivots 6 and 7 to the mounting bracket 2, and extend obliquely and rearwardly therefrom. The trailing ends of the links 3 and 4 are pivoted to a transverse link 5 via respective pivots 8 and 9, thereby completing the formation of a parallelogram type linkage. Evidently, during lateral adjustment movement of the adjustment mechanism, the transverse link 5 carries out translational movement only, i.e. does not carry out any angular movement. Therefore, upon application of an actuation force to the linkage, the main beam 13 can move from the "in furrow" ploughing mode of Figure 1 to the "on land" ploughing mode shown in Figure 2, and with the main beam 13 maintaining the same angle to the ploughing direction. An actuator 10 is provided to effect adjustment movement of the lateral adjustment mechanism (2, 3,4, 5), and in the illustrated embodiment comprises a fluid pressure operated piston / cylinder unit. A first piston and rod assembly 10b is slidable within a common cylinder and is operative to adjust the main beam 13 laterally between the positions shown in Figures 1 and 2, i.e. maintaining a substantially constant angle of the main beam 13 to the ploughing direction. The extension movement of the actuator can be seen clearly in Figure 2, in which the piston rod assembly 10b is fully extended relative to the cylinder.

An additional adjustment mechanism is provided, which interconnects the lateral adjustment mechanism (2, 3, 4, 5) and the main beam 13, and is moveable with the main beam 13 during lateral adjustment of the main beam (by extension or retraction of the piston rod assembly 10b). However, the additional mechanism is operative to adjust the angle of the main beam 13 relative to the ploughing direction, when it is required to adjust the width of the furrows formed by the plough bodies. Figures 3 and 4 show the main beam 13 adjusted to the position of smaller furrow width formation, and this is achieved by operation of the additional adjustment mechanism, and which is simultaneous with a different operation of the actuator 10, to move the main beam between "in the furrow" and "on land" ploughing modes shown in Figures 3 and 4 respectively.

The actuator therefore also includes a second piston and rod assembly 10a, and which can be operated in order to adjust the furrow width setting from the wide setting shown in Figure 1 to the narrower setting shown in Figure 3. The second piston rod assembly 10a is in circuit with a fluid pressure operated piston cylinder device 17, which forms part of the additional adjustment mechanism referred to in general terms above. Unit 17 is pivotally connected at its forward end via pivot 18 to the transverse link 5 of the parallelogram type adjustment linkage, and at its rear end is connected by pivot 19 to an adjusting bracket 23 connected to the main beam 13.

Therefore, operation of the actuator 10, from the position shown in Figure 1 to that shown in Figure 3, causes the main beam 13 to adjust its angle to the ploughing direction, and this is achieved by energising second piston rod assembly 10a and also simultaneous energisation of cylinder 17, which thereby extends its piston rod from the retracted position shown in Figure 1 to the extended position shown in Figure 3. This acts on the control bracket 23, to apply pivotal adjustment of the angle of inclination of main beam 13 to the ploughing direction, thereby to reduce the furrow width produced by the plough bodies. Therefore, cylinder 17 is used to control the angle of the main beam 13, by connecting cylinder 17 directly with the chamber of the cylinder 10 associated with the piston rod assembly 10a. The piston rod of cylinder 17 is shown in Figure 1 in the fully retracted position, and in Figure 3 is shown in the fully extended position. The operation of the cylinder 17 is therefore completely controlled by the chamber of the cylinder 10 associated with second piston rod assembly 10a.

The location of the pivot points 11 and 12 of cylinder actuator 10, and the pivot points 18 and 19 associated with cylinder 17, are chosen by trial and error method, such that both the lateral position taken up by main beam 13, and also its angle are as required.

When adjusting the piston rod assembly 10a to take up various intermediate positions between the two end positions, the cylinder 17 will be adjusted automatically to take up the correct position. It should be noted that the cylinders of actuator 10 and additional adjustment mechanism 17 do not have the same diameter, and therefore different lengthwise adjustments of the respective piston rods will take place.

As mentioned above, plough body support brackets 14 and 15 are mounted on the main main beam 13, and a usual control rod 16 is fastened to the main beam 13, to control the angle of the brackets 14 and 15 automatically, following furrow width adjustment caused by altering the angle of the main beam to the ploughing direction.

There are some components of the plough which are not shown in the figures, such as the main beams and the plough bodies, and which are fastened to the support brackets 14 and 15. Also, a depth / transport wheel is not shown, and usually will be mounted on the rearmost support bracket 15.

An internal wall divides the actuator cylinder 10 with separate chambers, so that separate moveable piston rod assemblies 10a and 10b can be slidably mounted in each chamber of the cylinder.

In Figure 1, the plough is shown adjusted to plough 20 inch wide furrows, while the tractor drives in the furrow. Figure 3 shows the plough adjusted for ploughing 12 inch wide furrows, again while the tractor drives in the furrow. The piston rod is shown fully retracted in Figure 1, and fully extended in Figure 3. Since the main lateral adjustment mechanism is a parallelogram type linkage, as described above, the main beam 13 would have the same angle in both positions, without the provision of the cylinder 17. However, by providing cylinder 17, forming the furrow width adjustment mechanism, (and which is in circuit with the chamber associated with the piston rod assembly 10a), cylinder 17 is able to control the angle of the main beam 13, and causes its adjustment from the wide furrow position of Figure 1, to the narrow furrow position of Figure 3.

The support brackets 14, 15 for the plough bodies and respective main beams must have the same angle relative to the ploughing direction all the time, and the parallel rod 16 controls this angle. A rod 20 interconnects a linkage point 21 on the transverse link 5 with a linkage point 22 on control rod 16, in order to control the position taken by the rod 16, and thereby maintain the brackets 14, 15 at the same angle. The pivot points 21 and 22 are found by trial and error method.

When extending the piston rod assembly 10b fully outwards, the plough is adjusted to the "on land" position, as shown in Figures 2 and 4. The angle of the main plough frame 13 is the same in Figure 1 (20 inch ploughing width "in the furrow"), and in Figure 2 (20 inch ploughing width "on land" ploughing). Similarly, in Figures 3 and 4, the main plough frame 13 takes the same angle, for 12 inch ploughing width, "in the furrow" and "on land" respectively. This is achieved because the adjusting mechanism, consisting of linkages 2, 3, 4 and 5, is a parallelogram type linkage. The transverse link 5 does not undergo any angular movement, and only a translational movement.

In a further embodiment (not shown), the separate mounting bracket (2) is eliminated, and in its place a mounting means (for the main beam 4 and related components) is incorporated (combined) within the headstock 1 as a unitary component. The pivot point 7 is then mounted on this mounting means and is located along the centre line of the main axle of the headstock 1. The other pivots 6 and 11 are also mounted on the mounting means.

A presently preferred arrangement is a modification of the headstock assembly as disclosed and illustrated in the specification and drawings of our co-pending UK patent application No. 0000948.0, filed 17^{th} January 2000. There are disclosed slide rails and cylinders to adjust the plough laterally relative to the headstock. However, in the modification, the slide rails and cylinders are removed, and therefore (with the mounting means incorporated with the headstock), the first piston rod assembly 10b is utilised in order to carry out any required lateral adjustment.

## Claims

1. A reversible plough which is intended to be coupled behind a propelling vehicle and which comprises:
a headstock (1);
a main beam (13) having a number of pairs of reversible plough bodies spaced apart along the length of the main beam;
a mounting means (2) on which the main beam (13) is mounted, said mounting means (2) being rotatable about a substantially horizontal axis in order to adjust the plough bodies between right side ploughing and left side ploughing;
a parallelogram type lateral adjustment mechanism (2, 3, 4, 5) which mounts the main beam (13) on the mounting bracket (2) and which is operative to adjust the main beam (13) laterally of the ploughing direction between "on land" and "in the furrow" ploughing modes, and while maintaining substantially the same angle of the main beam (13) to the ploughing direction; and
an additional adjustment mechanism (17) interconnecting said lateral adjustment mechanism (2, 3, 4, 5) and said main beam (13) and being moveable with the main beam (13) during lateral adjustment of the main beam (13), said additional mechanism (17) being operative to adjust the angle of the main beam (13) to the ploughing direction when it is required to adjust the width of furrows formed by the plough bodies.

2. A reversible plough according to claim 1, in which a fluid pressure operated piston / cylinder device (10) comprises an actuator connected to the lateral adjustment mechanism (2, 3, 4, 5).

3. A reversible plough according to claim 2, in which the actuator (10) comprises a first piston rod assembly (10b) which is operative to adjust the main beam (13) laterally while maintaining substantially constant angle of the main beam (13) to the ploughing direction, and a second piston rod assembly (10a) which is operative to adjust the angle of the main beam (13) to the ploughing direction.

4. A reversible plough according to claim 3, in which the additional adjustment mechanism comprises an adjustable link (17).

5. A reversible plough according to claim 4, in which the adjustable link is a fluid pressure operated piston / cylinder device (17) which is in circuit with said second piston rod assembly (10b) of said actuator (10).

6. A reversible plough according to any one of the preceding claims, in which the mounting means comprises a mounting bracket (2) which is rotatably mounted on the headstock (1).

7. A reversible plough according to any one of claims 1 to 5, in which the mounting means is incorporated with the headstock (1).

8. A reversible plough according to claim 7, when appendant to claim 3, in which the first piston rod assembly (10b) is operative to make any required lateral adjustment of the forward end of the main beam (13).
